# FASCICULE DE BREVET EUROPEEN

(11) **EP 0 517 892 B1**
(45) Date de publication et mention de la délivrance du brevet: **09.08.1995**
(21) Numéro de dépôt: 92903156.5
(22) Date de dépôt: 24.12.1991
(51) Int. Cl.: E21B 33/138, E21B 43/25

(54) **METHODE POUR REDUIRE LA DISPARITE DE PERMEABILITE ENTRE DEUX ZONES D'UNE FORMATION GEOLOGIQUE ET SON UTILISATION POUR LA RECUPERATION D'HYDROCARBURES**
VERFAHREN ZUR REDUZIERUNG DES PERMEABILITÄTSUNTERSCHIEDS ZWISCHEN ZWEI GEOLOGISCHEN FORMATIONEN UND SEINE ANWENDUNG ZUR KOHLENWASSERSTOFFGEWINNUNG
METHOD FOR REDUCING THE PERMEABILITY DISPARITY BETWEEN TWO ZONES OF A GEOLOGICAL FORMATION AND USE THEREOF FOR RECOVERING HYDROCARBONS

(30) Priorité: 28.12.1990 FR 9016437
(43) Date de publication de la demande: 16.12.1992
(73) Titulaire: INSTITUT FRANCAIS DU PETROLE, 92502 Rueil-Malmaison (FR)
(72) Inventeur: CHAUVETEAU, Guy, F-92500 Rueil-Malmaison (FR); ZAITOUN, Alain, F-76000 Rouen (FR); KOHLER, Norbert, F-78100 Saint-Germain-en-Laye (FR)
(74) Mandataire: Coadour, Jean
(86) Numéro de dépôt international: FR9101069
(87) Numéro de publication internationale: WO9212325

(56) Documents cités:
- EP-A- 0 116 775
- EP-A- 0 157 957
- US-A- 3 323 589
- US-A- 4 261 421

## Description

La présente invention concerne une méthode pour réduire les disparités de perméabilité d'une formation géologique hétérogène ou partiellement fissurée.

Cette invention concerne également son application à l'amélioration de la récupération d'hydrocarbures, soit en prévenant ou traitant les venues d'eau dans les puits producteurs, soit en modifiant le profil des perméabilités de la formation pour rendre l'injection d'un fluide de balayage beaucoup plus efficace.

La récupération primaire par drainage naturel des gisements d'hydrocarbures liquides peut être assez faible, même en présence d'un aquifère actif ou d'une calotte de gaz libre, aussi il est souvent nécessaire d'utiliser une méthode de récupération assistée par exemple en injectant dans la formation un fluide moteur.

On peut injecter de la vapeur d'eau, de l'eau traitée pour être rendue compatible avec la roche réservoir, des gaz non miscibles aux hydrocarbures, de la vapeur, des gaz miscibles aux hydrocarbures, des micro-émulsions ou des fluides à base de polymères ayant une forte viscosité in situ.

Tous ces procédés, bien connus de l'art antérieur, ont pour objectif d'obtenir un balayage le plus efficace possible de la roche réservoir contenant l'hydrocarbure. Ce balayage consiste à repousser l'hydrocarbure vers les puits de production. Mais ces procédés se heurtent tous, à des degrés différents fonction de leur sophistication, au problème de l'efficacité du processus quand le réservoir présente des fortes hétérogénéités de perméabilité, surtout lorsqu'elles proviennent de la stratification des couches réservoirs.

En effet, l'avance du front de déplacement sera plus rapide dans les couches plus perméables ou les fissures que dans les autres couches. De ce fait, le déséquilibre entre les différentes couches s'accroît au cours du temps.

Il en résulte, si les différences de perméabilités sont grandes, que le fluide de déplacement fait irruption rapidement dans les puits de production par ces voies de cheminement préférentiel que sont les couches les plus perméables alors qu'une grande part de l'huile matricielle reste piégée dans les couches moins perméables.

Ainsi, une hétérogénéité des perméabilités est toujours un élément défavorable pour la récupération des hydrocarbures situés dans une formation géologique.

Dans le brevet US-A-3956145, on propose d'utiliser un fluide complexe permettant de réduire la mobilité de l'eau dans la couche réservoir et ainsi d'augmenter le déplacement de l'huile par rapport à l'eau. Mais ce document concerne surtout les réservoirs produisant des fortes proportions d'eau. En effet, dans cette catégorie de réservoirs, la mobilité du fluide aqueux sera effectivement réduite dans les zones de forte perméabilité mais cette zone sera toujours le cheminement préférentiel du fluide de balayage car la couche réservoir n'est pas traitée sélectivement.

Le document US-A-3323589 décrit une méthode dans laquelle on précipite des particules solides dans les pores d'une formation géologique.

Le document EP-A-0116775 décrit une suspension de billes destinées à obturer des perforations effectuées dans un casing cimenté.

Le document EP-A-0157957 décrit l'usage de particules de phthalimide pour colmater des zones fracturées. Elles jouent le rôle de réducteur de filtrat. Ces particules ne s'adsorbent pas sur la roche.

Le document US-A-4261421 décrit une méthode dont l'objet est très proche de celui du document EP-A-0157957 avec la particularité que le produit colmatant est soluble dans de l'acide.

Au contraire, la présente invention permet le traitement sélectif des zones de forte perméabilité sans dégrader les zones de faible perméabilité. On pourra ainsi procéder dans cette même couche à une injection d'un fluide de balayage avec une meilleure efficacité tant verticale que horizontale.

La présente invention pourra également être appliquée à la prévention ou au traitement des venues d'eau dans un puits en production.

On connaît selon l'art antérieur des moyens de colmater les zones de venue d'eau. Il s'agit en général d'injecter en pression une mixture notamment à base de ciment ou de résine thermodurcissable qui ont pour objectif de colmater irréversiblement ladite zone. Cela nécessite des complétions sélectives de puits qui sont assez coûteuses. On peut comme dans le document US-A-3952806 fabriquer in situ un gel pour altérer la perméabilité de la zone. Mais le gel est pratiquement irréversible et réduit l'indice de productivité de la couche réservoir car le gel peut également se former ou se propager dans les zones de plus faible perméabilité.

Au contraire, le fluide de la présente invention est sélectif par nature, ajustable à la perméabilité de la zone à traiter et n'entraînera pas de colmatage des zones les moins perméables.

La présente invention concerne également les installations d'exploitation de ressources géothermiques où il est important de faire produire l'ensemble des couches du gisement même si celles-ci présentent des hétérogénéités en perméabilité.

Ainsi, la présente invention concerne une méthode pour réduire les disparités de perméabilité entre au moins deux zones d'une formation géologique hétérogène traversée par un puits en communication avec la surface, sans colmater l'une des zones, lesdites zones comportant une zone de plus forte perméabilité par rapport à une zone de plus faible perméabilité, ladite méthode comportant les étapes suivantes :
- on choisit des particules solides dont le diamètre est inférieur à la taille des pores de la zone de plus forte perméabilité et au moins égal à la taille des pores de la zone de plus faible perméabilité, lesdites particules ayant une taille comprise entre 0,01 et 100 micromètres,
- on stabilise les particules solides dans un état dispersé dans un fluide,
- on injecte ledit fluide comportant les particules solides en suspension dans la zone de plus forte perméabilité, ledit fluide restant stable dans les conditions de fond,
- on adsorbe lesdites particules sur la matrice rocheuse de ladite zone de plus forte perméabilité.

Dans la méthode, on peut stabiliser lesdites particules solides les mettant en suspension dans un fluide comportant des produits dispersants tels que des polymères ou copolymères hydrosolubles et en ce que lesdits produits dispersants sont adaptés à s'adsorber sur lesdites particules solides.

Lesdits produits dispersants peuvent être des polymères hydrosolubles neutres, anioniques ou cationiques, préférentiellement de haute masse moléculaire, tels les polyacrylamides neutres ou chargés, ou des copolymères d'acrylamide, le polyoxyéthylène, l'alcool polyvinylique, les polystyrènes sulfonates, ainsi que des copolymères statistiques, séquencés ou diblocs dont l'un des blocs seulement peut s'adsorber, des polysaccharides tels que la gomme xanthane, le scléroglucane, les galactomannanes, les pullulanes, les alginates, amidons, pectines, dextranes, des dérivés cellulosiques tels que la carboxyméthylcellulose (CMC) ou l'hydroxyéthylcellulose (HEC).

Lesdites particules solides peuvent être des particules de silice, de carbure de silicium, d'alumine, d'oxyde de zirconium, de titane, ou tout oxyde minéral, de carbonates, des argiles, ou toutes autres particules solides pouvant adsorber un produit dispersant.

Lesdites particules peuvent être en latex de polystyrène comportant des groupements amidine chargé positivement et lesdites particules de latex peuvent être stabilisées dans un fluide ne comportant pas de produit dispersant et avoir une taille moyenne de 0,5 micromètre.

Ledit fluide comportant en suspension lesdites particules peut avoir une viscosité voisine de celle de l'eau.

Avant l'injection dudit fluide comportant les particules solides en suspension, on peut injecter un fluide comportant des polymères adsorbables dans la zone de plus forte perméabilité pour saturer en polymère un volume déterminé de matrice rocheuse.

L'invention concerne également une application de la méthode à la récupération assistée par injection d'un fluide de déplacement des hydrocarbures contenus dans la formation géologique, ledit fluide de déplacement étant injecté dans ladite formation par le moyen dudit puits.

On ne sortira pas du cadre de cette invention si les utilisations précédentes se font à travers des complétions sélectives, c'est-à-dire des moyens de séparation des zones de différentes perméabilités, l'invention conservant ses autres avantages.

L'idée maîtresse de l'invention est la conception d'une suspension comportant des particules solides stabilisées. L'état stabilisé peut être obtenu par des produits spécifiques qui s'adsorbent sur chaque particule. La suspension est alors stable puisque les particules ne peuvent s'agréger entre elles pour former des amas grâce aux rôles spécifiques desdits produits stabilisants.

Mais des particules solides peuvent être également intrinsèquement stables dans la solution aqueuse, sans nécessairement faire appel à des produits additionnés à la solution. En effet, les particules solides peuvent comporter, soit une ionisation de surface, c'est par exemple le cas des oxydes naturels, soit des espèces chargées et localisées à la surface des particules lors de leur synthèse, c'est par exemple le cas des latex selon l'invention. Ce sont alors ces charges ou espèces qui stabilisent lesdites particules dans la solution.

Cette suspension reste stable dans les conditions de fond qui règnent au niveau de la formation géologique. La stabilité n'est pas affectée par les plus hautes températures que l'on peut rencontrer dans les formations géologiques souterraines. Les salinités, même jusqu'à saturation ainsi que les pH rencontrés dans les formations souterraines ne présentent pas d'obstacle incontrôlables vis-à-vis de la stabilité du fluide selon l'invention.

Le choix de la taille des particules solides est fait par rapport à l'éventail de taille des pores de la formation hétérogène. En effet, une particule suffisamment grosse ne pénétrera pas dans les zones de faible perméabilité, alors qu'elle pourra pénétrer dans les zones de forte perméabilité.

La taille des particules peut être inférieure à la taille moyenne des pores de la zones de faibles perméabilité sans que la solution comportant les particules pénètre profondément dans cette zone.

Bien entendu, la particule solide pourra pénétrer quelque peu dans la formation de faible perméabilité, mais cette pénétration restera toujours faible à cause du phénomène d'empilement que l'on contrôle par le choix de la taille de ladite particule. Cette faible pénétration peut être éliminée par les traitements de formation connus dans la profession tels que le changement du sens de circulation, l'acidification, la fricturation ou la sonication.

Ce choix de la taille des particules conduira le fluide à avoir une capacité d'injectivité sélective dans les zones de cheminement préférentiel.

Les produits stabilisants adsorbés sur les particules solides sont également adaptés à s'adsorber sur la matrice de la roche réservoir.

Ce processus d'adsorption d'une solution notamment à base de polymères est bien connu de l'art antérieur, mais la capacité de réduction du diamètre des pores est faible car limité par l'épaisseur de la couche de produits adsorbés sur la matrice.

Par contre, dans cette invention, la particule solide se fixe sur la matrice grâce d'abord au phénomène d'adsorption du produit stabilisant, puis dans un deuxième temps également par l'intermédiaire des forces de Van der Waals entre les particules et la matrice rocheuse. Le diamètre des pores est ainsi réduit par la présence desdites particules ce qui diminue la perméabilité de la zone où a pu pénétrer ladite suspension.

Dans le cadre de cette invention, il est possible d'utiliser plusieurs fluides comportant des particules solides afin de superposer plusieurs couches de particules solides les unes au dessus des autres en réduisant ainsi la perméabilité de la formation par étapes successives. Les différents fluides doivent être adaptés à ce que les particules du premier s'adsorbent sur la matrice, puis que celles du second s'adsorbent sur les précédentes et ainsi de suite, si cela est nécessaire. Les adsorptions successives sont contrôlées par la nature des charges des particules ou des produits adsorbés sur les particules. Les fluides peuvent comporter ou ne pas comporter de produits d'addition stabilisants.

Il n'y a pas de risque de colmatage de la formation productrice car les particules solides restent dans un état stable même lorsqu'elles se sont adsorbées sur la matrice rocheuse ou la couche précédente. Cela garantit l'absence de formation d'agrégats de particules qui pourrait boucher les pores.

Pour illustrer l'invention et d'une manière nullement limitative, la suspension comporte de 1 à 2% de particules solides, notamment d'alumine de taille moyenne 0,8 micromètres, stabilisée par du polyacrylamide partiellement hydrolysé de masse moléculaire moyenne 7 10⁶. Le fluide porteur est de l'eau de gisement avec éventuellement du sel ajouté pour assurer une adsorption suffisante sur les particules solides. On peut également donner en exemple un fluide comportant une solution "autostabilisée" de particules de latex de polystyrène, lesquelles comportent des groupements amidine chargées positivement et d'une taille moyenne de 0,5 micromètres.

Cette dernière solution testée en laboratoire, à montré une bonne stabilité intrinsèque et une capacité de réduire notablement la perméabilité d'un massif rocheux après injection, sans qu'il y ait eu le moindre colmatage.

La présente invention a l'avantage de conserver pratiquement toute son efficacité, même si dans le temps, l'agent stabilisant se dégrade sensiblement. En effet, les particules solides restent fixées sur la matrice rocheuse grâce aux forces de Van der Waals et continuent à jouer leur rôle de réducteur de la perméabilité de la zone où la suspension a pénétré.

La présente invention sera mieux comprise et ses avantages apparaîtrons plus nettement à la description qui suit d'exemples nullement limitatifs illustrés par les figures ci-annexées, parmi lesquelles:
- la figure 1 représente une coupe schématique d'un gisement en production assistée par injection d'un fluide de déplacement,
- la figure 2 représente le même gisement en production assistée par injection d'un fluide de déplacement après traitement de la formation avec le fluide de l'invention,
- la figure 3 représente une amélioration du traitement de la formation par injection préalable d'un agent adsorbant avant celle de la suspension stable,
- la figure 4 représente la matrice rocheuse de la zone de forte perméabilité de la formation,
- la figure 4A représente la même matrice après traitement par un fluide comportant des produits adsorbants,
- la figure 4B représente la même matrice traitée par la suspension de l'invention,
- les figures 5 et 6 représentent l'utilisation de l'invention pour prévenir ou traiter des venues d'eau.

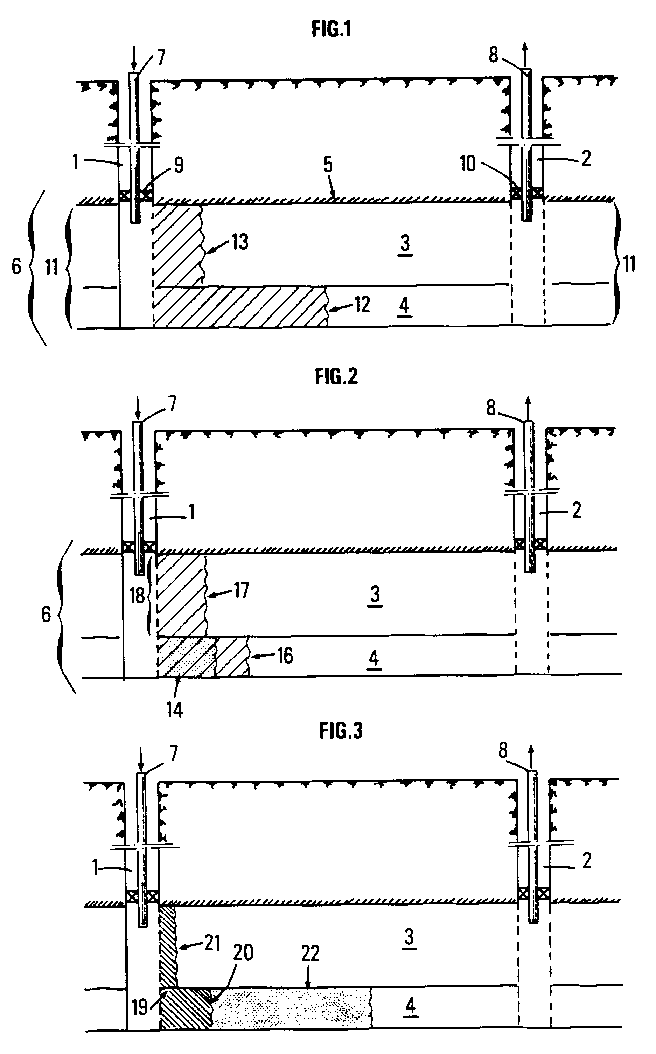

La figure 1 représente en coupe une formation géologique 6 constituant un piège d'hydrocarbures liquides. La roche couverture 5 surmonte la roche réservoir qui comporte une zone 3 de faible perméabilité et une zone 4 de forte perméabilité.

Deux puits 1 et 2 relient la formation productrice à la surface. Les conduites 7 et 8 complètent lesdits puits et pourront comporter des moyens d'étanchéité annulaire type packer 9 et 10. Ces conduites 7 et 8 seront utilisées pour respectivement injecter dans la formation et produire l'effluent contenu dans la formation jusqu'en surface.

Au droit de la formation 11, les deux puits 1 et 2 sont en général cuvelés par des tubes aciers qui seront alors perforés pour rétablir la liaison couche-trou.

Dans le cadre d'une récupération assistée par injection, on refoule par pompage le fluide de déplacement par la conduite 7. Ledit fluide pénètre dans la formation en repoussant devant lui l'hydrocarbure vers le puits 2 qui est un puits de production.

Lorsque le réservoir d'hydrocarbure comporte des zones de perméabilités très différentes, l'avancée du front 12 est plus rapide dans la zone 4 que l'avancée du front 13 dans la zone 3. Le fluide de balayage va faire irruption très rapidement dans le puits de production 2 et l'effluent produit aura une proportion d'hydrocarbure faible. En conséquence, la zone 3 est mal, ou même plus du tout balayée par le fluide d'injection et le taux de récupération sera grandement diminué.

La figure 2 représente la même formation géologique 6 où il a été procédé à une injection de la suspension de l'invention par le canal de 7. Le volume de ladite suspension a pénétré en 14 dans la zone de forte perméabilité 4 grâce à la taille des particules dispersées qui a été choisie intermédiaire entre la taille des pores de la zone 4 et la taille des pores de la zone 3. La zone envahie par ladite suspension a ainsi sa perméabilité réduite.

Au cours de l'injection de la suspension, un dépôt ou cake a pu se former au droit 18 de la zone 3 de faible perméabilité. Mais ce dépôt est faible grâce à la nature de la suspension de l'invention qui ne peut pratiquement pas pénétrer dans la zone 3. Si ce cake représente un obstacle à l'injection du fluide de balayage, il sera de préférence détruit notamment en inversant le sens des écoulements dans la zone 3 en mettant en pompage par la canalisation 7, par ultrasons, ou par d'autres moyens connus dans la profession pour détruire un cake déposé sur les parois d'un puits.

Lorsque ensuite on rétablit l'injection du fluide de déplacement à partir de 7, les fronts de balayage 17 et 16 respectivement dans les zones 3 et 4, ont des avancées sensiblement comparables grâce à l'augmentation des pertes de charge dans la partie 14 de la zone 4.

Le profil des perméabilités peut être pratiquement égalisé ce qui autorise une récupération secondaire ou même tertiaire suivant la nature du fluide de déplacement injecté.

La mise en place du volume 14 de suspension est grandement facilité par le fait que ladite suspension a une viscosité faible, la plus proche de celle de l'eau. Cela facilite et diminue les temps d'opérations d'injection.

La figure 3 représente une amélioration de l'application précédente. En effet, avant d'injecter la suspension de l'invention, on traite le volume 19 de roche au voisinage du puits 1, par injection d'un agent adsorbant notamment comparable à celui utilisé pour stabiliser les particules solides de la suspension. Les fronts 20 et 21 montrent les avancées différentes dudit agent respectivement dans les zones 4 et 3 de perméabilités différentes.

Après cette première étape, on injecte la suspension stable de l'invention. Celle-ci ne pénètre pas dans la zone 3 comme précédemment par sa sélectivité. Elle s'injecte dans la zone 4 de forte perméabilité sans s'adsorber dans la partie 19 car la matrice a déjà été saturée d'agent adsorbant au cours de la première étape. La suspension traverse cette partie pour s'adsorber sur la matrice rocheuse vierge de traitement de la partie 22.

L'amélioration représentée en figure 3 réside dans le maintien d'une bonne caractéristique d'injectivité dans la zone 4 au voisinage du puits injecteur 1 malgré la diminution de perméabilité consécutive à l'injection de la suspension stable.

En effet, il est connu qu'en écoulement radial circulaire les pertes de charge sont fortement concentrées au voisinage du puits où les vitesses d'écoulement sont fortes. Aussi il est intéressant de ne pas diminuer la perméabilité de cette zone et de ne traiter la perméabilité de la formation qu'à une plus grande distance du puits.

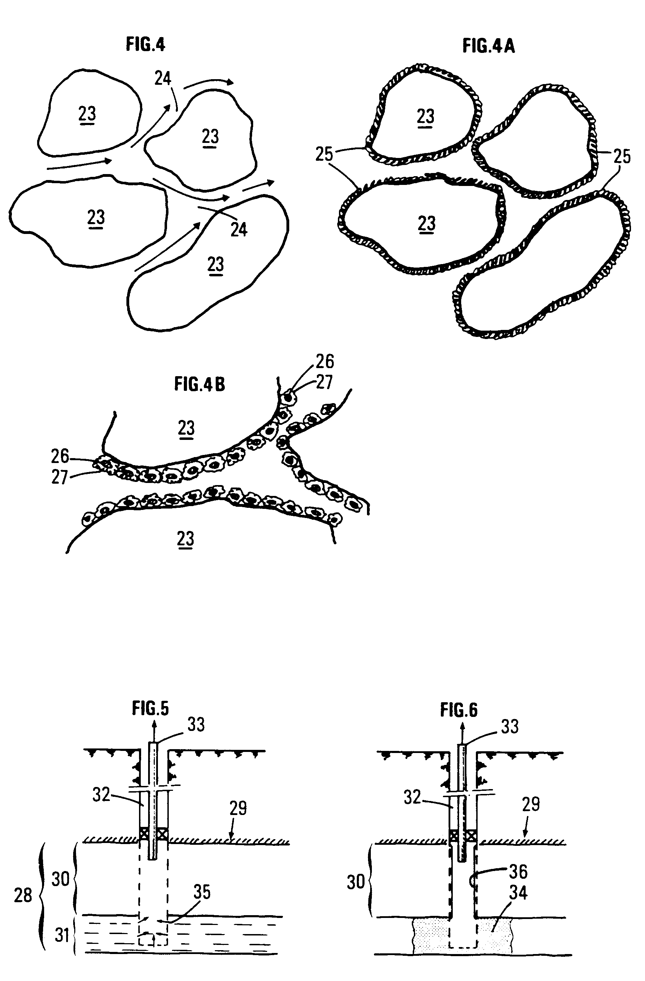

Les figures 4, 4A et 4B illustrent le mécanisme de diminution de perméabilité par la représentation de grains de roche 23 et des pores 24. Les flèches représentent la circulation d'un fluide. Sur la figure 4 la matrice est vierge.

La figure 4A représente cette même matrice sur laquelle a été adsorbée un agent notamment des polymères ou copolymères préférentiellement de forte masse moléculaire. Cet agent établit une couche régulière 25 sur toute la surface rocheuse de la matrice ce qui réduit ainsi les dimensions des pores. L'épaisseur de la couche 25 est limité par la structure moléculaire de l'agent adsorbant.

L'adsorption d'un produit se caractérise par sa présence préférentielle, c'est à dire une concentration plus forte au voisinage immédiat de la surface solide. Le produit peut être en contact direct avec la surface ou par l'intermédiaire d'une molécule d'eau ou d'un ion. Cette adsorption peut être réversible dans le cas de l'adsorption physique de petites molécules, ou quasi irréversible pendant de longues périodes allant de quelques jours à quelques années dans le cas d'adsorption physique de grandes molécules comme les polymères. On peut considérer que l'adsorption est irréversible dans le cas où il existe une liaison chimique forte avec le solide.

L'épaisseur de la couche ne peut pas être augmentée à volonté et cette technique ne permet pas d'agir efficacement dans les cas de fortes perméabilités.

La figure 4B illustre l'action de la suspension stable de l'invention où des produits stabilisants se sont adsorbés sur des particules solides. Les grains 26 sont encapsulés sous une couche 27 de stabilisants. Lesdites particules vont s'adsorber sur la matrice sur laquelle n'est pas déjà adsorbé un agent dispersant, que ce soit des tensioactifs, des polymères ou des copolymères ou un mélange de ces produits.

La présence des particules solides permet, par le choix de leur dimension, de régler la diminution de perméabilité de la zone la plus perméable et d'empêcher la pénétration desdites particules dans les zones de faible perméabilité.

La représentation simplifiée de la figure 4B n'est pas limitative de la taille des particules relativement à la taille des pores 24.

La figure 5 représente un puits 32 en production par le canal d'une conduite 33. La formation productrice 28 est surmontée d'une roche couverture 29. Cette formation productrice 28 présente des hétérogénéités de perméabilité. La couche 30 est une zone productrice de faible perméabilité, la couche 31 une zone de forte perméabilité où sont apparues des venues d'eau qui envahissent le puits par les perforations 35.

La figure 6 illustre l'application de l'invention aux traitements des venues d'eau comme illustré figure 5. La production est arrêtée, puis on injecte un volume de la suspension stable de l'invention pour traiter la perméabilité de la formation 34 envahie d'eau. Cette injection se fait selon les règles de l'art en usage dans la profession, soit par la conduite de production 33, soit par un tubing concentrique à cette conduite.

La suspension pénètre dans la zone 34 et diminue sa perméabilité à l'eau sans affecter la zone 30. Un cake 36 de particules solides peut se déposer au droit de cette formation peu perméable 30.

A la remise en production, les venues d'eau seront limitées par la diminution de perméabilité de la zone concernée et dans le même temps l'écoulement radial concentrique vers le puits détruit le cake 36 qui aurait pu se former. Si cela est nécessaire, on peut utiliser la technique de sonication.

On ne sortira pas du cadre de cette invention si les puits d'injection ou de production sont inclinés par rapport à la verticale de même s'ils sont sub-horizontaux.

## Revendications

1. Méthode pour réduire les disparités de perméabilité entre au moins deux zones d'une formation géologique (11) hétérogène traversée par un puits (1, 2, 32) en communication avec la surface, sans colmater l'une des zones, lesdites zones comportant une zone de plus forte perméabilité (4) par rapport à une zone de plus faible perméabilité (3), ladite méthode comportant les étapes suivantes :
- on choisit des particules solides dont le diamètre est inférieur à la taille des pores de la zone de plus forte perméabilité et au moins égal à la taille des pores de la zone de plus faible perméabilité, lesdites particules ayant une taille comprise entre 0,01 et 100 micromètres,
- on stabilise les particules solides dans un état dispersé dans un fluide,
- on injecte ledit fluide comportant les particules solides en suspension dans la zone de plus forte perméabilité, ledit fluide restant stable dans les conditions de fond,
- on adsorbe lesdites particules sur la matrice rocheuse de ladite zone de plus forte perméabilité.

2. Méthode selon la revendication 1, caractérisée en ce que l'on stabilise lesdites particules solides les mettant en suspension dans un fluide comportant des produits dispersants tels que des polymères ou copolymères hydrosolubles et en ce que lesdits produits dispersants sont adaptés à s'adsorber sur lesdites particules solides.

3. Méthode selon l'une des revendications 1 ou 2, caractérisée en ce que lesdits produits dispersants sont des polymères hydrosolubles neutres, anioniques ou cationiques, préférentiellement de haute masse moléculaire, tels les polyacrylamides neutres ou chargés, ou des copolymères d'acrylamide, le polyoxyéthylène, l'alcool polyvinylique, les polystyrènes sulfonates, ainsi que des copolymères statistiques, séquencés ou diblocs dont l'un des blocs seulement peut s'adsorber, des polysaccharides tels que la gomme xanthane, le scléroglucane, les galactomannanes, les pullulanes, les alginates, amidons, pectines, dextranes, des dérivés cellulosiques tels que la carboxyméthylcellulose (CMC) ou l'hydroxyéthylcellulose (HEC).

4. Méthode selon l'une des revendications 1 à 3, caractérisée en ce que lesdites particules solides sont des particules de silice, de carbure de silicium, d'alumine, d'oxyde de zirconium, de titane, ou tout oxyde minéral, de carbonates, des argiles, ou toutes autres particules solides pouvant adsorber un produit dispersant.

5. Méthode selon la revendication 1, caractérisée en ce que lesdites particules sont en latex de polystyrène comportant des groupements amidine chargé positivement, en ce que lesdites particules ont une taille moyenne de 0,5 micromètre et en ce que lesdites particules de latex sont stabilisées dans un fluide ne comportant pas de produit dispersant.

6. Méthode selon l'une des revendication 1 à 5, caractérisé en ce que ledit fluide comportant en suspension lesdites particules a une viscosité voisine de celle de l'eau.

7. Méthode selon l'une des revendications 1 à 6, caractérisée en ce qu'avant l'injection dudit fluide comportant les particules solides en suspension, on injecte un fluide comportant des polymères adsorbables dans la zone de plus forte perméabilité pour saturer en polymère un volume déterminé de matrice rocheuse.

8. Application de la méthode selon l'une des revendications précédentes à la récupération assistée par injection d'un fluide de déplacement des hydrocarbures contenus dans la formation géologique, ledit fluide de déplacement étant injecté dans ladite formation par le moyen dudit puits.

## Claims

1. A method for reducing the disparities in permeability between at least two zones of a heterogenous geological formation 11 through which a well communicating with the surface (1, 2, 32) passes, without blocking one of the zones, these zones comprising a zone of higher permeability relative to a zone of lower permeability (3), the method comprising the following steps:
- solid particles are chosen whose diameter is smaller than the size of the pores of the zone of higher permeability and at least equal to the size of the pores of the zone of lower permeability, these particles being between 0.01 and 100 micrometres in size,
- the solid particles are stabilised in a dispersed state in a fluid,
- this fluid containing the solid particles in suspension is injected into the zone of higher permeability, this fluid remaining stable under down-hole conditions,
- these particles are adsorbed on the parent rock of the zone of higher permeability.

2. A method as claimed in claim 1, characterised in that these solid particles are stabilised by placing them in suspension in a fluid containing dispersing agents such as water soluble polymers or copolymers and in that these dispersing agents are designed to adsorb on these solid particles.

3. A method as claimed in one of claims 1 or 2, characterised in that these dispersing agents are water soluble neutral, anionic or cationic polymers, preferably with a high molecular mass, such as neutral or charged polyacrylamides, or copolymers of acrylamide, polyoxyethylene, polyvinyl alcohol, polystyrene sulphonates, as well as statistical copolymers that are sequence or di-block polymers in which only one of the blocks is capable of adsorption, polysaccharides, such as xanthan gum, scleroglucan, galactomannans, multipliers, alginates, starches, pectins, dextrans, cellulosic derivatives such as carboxymethylcellulose (CMC) or hydroxyethylcellulose (HEC).

4. A method as claimed in one of claims 1 to 3, characterised in that these solid particles are particles of silica, silicon carbide, alumina, zirconium oxide, titanium or any mineral oxide, carbonates, earths, or any other solid particles capable of adsorbing a dispersing agent.

5. A method as claimed in claim 1, characterised in that these solid particles are in polystyrene latex containing positively charged amide groups, in that these particles are of an average size of 0.5 micrometres and in that these latex particles are stabilised in a fluid containing no dispersing agent.

6. A method as claimed in one of claims 1 to 5, characterised in that the fluid containing these particles in suspension has a viscosity close to that of water.

7. A method as claimed in one of claims 1 to 6, characterised in that before injecting the fluid containing the solid particles in suspension, a fluid containing adsorbable polymers is injected into the zone of higher permeability to saturate with polymer a given volume of the parent rock.

8. Application of the method, as claimed in one of the previous claims, to assisted recovery, using injection of a displacement fluid, of the hydrocarbons contained in the geological formation, this displacement fluid being injected into the formation by means of the well.

## Patentansprüche

1. Verfahren zum Vermindern von Permeabilitätsgefällen zwischen wenigstens zwei Zonen einer heterogenen, von einer Bohrung (1, 2, 32) durchdrungenen, in Verbindung mit der Oberfläche stehenden geologischen Formation (11), ohne die eine der Zonen zu verschließen, wobei die Zonen eine Zone (4) von größerer Permeabilität in bezug auf eine Zone (3) von geringerer Permeabilität umfassen, wobei das Verfahren die folgenden Schritte umfaßt:
- man wählt Feststoffteilchen aus, deren Durchmesser kleiner als die Größe der Poren der Zone von größerer Permeabilität oder wenigstens gleich der Größe der Poren der Zone von geringerer Permeabilität ist, wobei die Teilchen eine Größe einschließlich zwischen 0,01 und 100 Mikrometern aufweisen,
- man stabilisiert die Feststoffteilchen in einem dispergierten Zustand in einem Fluid,
- man injiziert das Fluid, welches die Feststoffteilchen umfaßt, in Suspension in die Zone von größerer Permeabilität, wobei das Fluid unter den Bohrlochbedingungen stabil bleibt,
- man adsorbiert die Teilchen an einer Gesteinsmatrix der Zone von größerer Permeabilität.

2. Verfahren nach Anspruch 1, dadurch gekennzeichnet, daß man die Feststoffteilchen durch Aufschlämmen in einem Fluid, das Dispergiermittelprodukte, wie wasserlösliche Polymere oder Copolymere, umfaßt, stabilisiert und daß die Dispergiermittelprodukte geeignet sind, sich an den Feststoffteilchen anzulagern.

3. Verfahren nach einem der Ansprüche 1 oder 2, dadurch gekennzeichnet, daß die Dispergiermittelprodukte neutrale, anionische oder kationische wasserlösliche Polymere, vorzugsweise von großer Molmasse, wie die neutralen oder beladenen Polyacrylamide oder Copolymere aus Acrylamid, Polyoxyethylen, Polyvinylalkohol, Polystyrolsulfonate, sowie statistische, sequenzierte oder zwei-blockige Copolymere, von denen einer der Blöcke sich nur anlagern kann, Polysaccharide, wie Xanthangummi, Skleroglucan, Galactomanane, Pullulane, Alginate, Amidone, Pectine, Dextrane, Cellulosederivate, wie die Carboxymethylcellulose (CMC) oder die Hydroxyethylcellulose (HEC), sind.

4. Verfahren nach einem der Ansprüche 1 bis 3, dadurch gekennzeichnet, daß die Feststoffteilchen Teilchen aus Kieselerde, Siliciumcarbid, Aluminiumoxid, Zirkonoxid, Titanoxid, oder jedem Mineraloxid, Carbonaten, Tonen, oder sämtlichen anderen Feststoffteilchen, die ein Dispergiermittelprodukt adsorbieren können, sind.

5. Verfahren nach Anspruch 1, dadurch gekennzeichnet, daß die Teilchen aus Polystyrollatex bestehen, der positiv geladene Amidingruppen umfaßt, daß die Teilchen eine mittlere Größe von 0,5 Mikrometer aufweisen und daß die Teilchen aus Latex in einem Fluid stabilisiert sind, welches kein Dispergiermittelprodukt umfaßt.

6. Verfahren nach einem der Ansprüche 1 bis 5, dadurch gekennzeichnet, daß das Fluid, welches die Teilchen in Suspension umfaßt, eine Viskosität nahe derjenigen von Wasser aufweist.

7. Verfahren nach einem der Ansprüche 1 bis 6, dadurch gekennzeichnet, daß man vor der Injektion des Fluids, welches die Feststoffteilchen in Suspension umfaßt, ein Fluid, welches adsorbierbare Polymere umfaßt, in die Zone von größerer Permeabilität injiziert, um ein bestimmtes Volumen der Gesteinsmatrix mit Polymer zu sättigen.

8. Anwendung des Verfahrens gemäß einem der vorhergehenden Ansprüche auf die durch Injektion eines Verdrängungsfluids gestützten Wiedergewinnung von Kohlenwasserstoffen, die in der geologischen Formation enthalten sind, wobei das Verdrängungsfluid in die Formation durch die Einrichtung der Bohrung injiziert wird.
